# EUROPÄISCHE PATENTANMELDUNG

(11) **EP 4 625 069 A1**
(43) Veröffentlichungstag der Anmeldung: **01.10.2025**
(21) Anmeldenummer: 24166361.6
(22) Anmeldetag: 26.03.2024
(51) Int. Cl.: G05B 19/04, G05B 19/042

(54) **KONFIGURIERBARER SENSOR, VERFAHREN ZUM KONFIGURIEREN EINES SENSORS UND SYSTEM ZUM KONFIGURIEREN EINES SENSORS**

(71) Anmelder: SICK AG, 79183 Waldkirch (DE)
(72) Erfinder: Eichin, Florian, 79100 Freiburg (DE); Lauer, Roman, 79111 Freiburg (DE); Kim, Valentin, 79232 March (DE); Zink, Matthias, 79286 Glottertal (DE)

(57) **Zusammenfassung**

Es wird ein konfigurierbarer Sensor mit einer Steuer- und Auswerteeinheit und einem Speicher angegeben, wobei in der Steuer- und Auswerteeinheit ein Konfigurationsmodus des Sensors durch ein auf einem mit dem Sensor verbundenen Endgerät vorgesehenen Anwendungsprogramm aktivierbar ist und in dem Speicher wenigstens ein Parametersatz des Sensors speicherbar ist. Die Steuer- und Auswerteeinheit ist dazu eingerichtet ein vom Anwendungsprogramm an die Steuer- und Auswerteeinheit ausgesendetes Aktivitätssignal des Anwendungsprogramms zu empfangen und den Konfigurationsmodus des Sensors zu deaktivieren und den Sensor in einen Produktivmodus zu versetzen, wenn das Aktivitätssignal nicht innerhalb eines vorgegebenen Zeitabstands empfangen wird. Ebenfalls angegeben wird ein System zum Konfigurieren eines Sensors sowie durch ein Verfahren zum Konfigurieren eines Sensors.

## Beschreibung

Die Erfindung betrifft einen konfigurierbaren Sensor nach dem Oberbegriff von Anspruch 1, ein System zum Konfigurieren eines Sensors nach dem Oberbegriff von Anspruch 5, sowie ein Verfahren zum Konfigurieren eines Sensors nach dem Oberbegriff von Anspruch 11.

In industriellen Prozessen, die beispielsweise der Herstellung, Sortierung und/oder Verarbeitung von Werkstücken oder Gegenständen dienen, wird üblicherweise eine Vielzahl von Sensoren eingesetzt, die die Werkstücke beobachten bzw. erfassen. Aus den Messdaten der Sensoren werden dann Daten erhoben, die der Steuerung des industriellen Prozesses dienen. Üblicherweise werden die Parameter der Sensoren (das heißt deren Konfiguration) einmalig eingestellt. Bei dieser Einstellung werden die Parameter an die üblicherweise in dem industriellen Prozess vorherrschenden Randbedingungen angepasst. Beispielsweise kann es sich bei dem Sensor um eine Kamera handeln, deren Belichtungszeit auf die üblichen Helligkeitsverhältnisse und/oder die Farbe und Helligkeit der zu beobachtenden Werkstücke oder Gegenstände eingestellt wird.

Derartige Sensoren verfügen häufig über eine Vielzahl von Parametern und sind dadurch schwierig zu konfigurieren. Dem Anwender wird diese Konfiguration durch Anwendungsprogramme erleichtert, die auf einem mit dem Sensor verbundenen Endgerät ausgeführt werden und beispielsweise eine intuitive Oberfläche zur Sensorkonfiguration und Überwachung bieten. Derartige Anwendungsprogramme werden häufig als Web-Anwendungsprogramme angeboten, d. h. die Anwendung muss nicht mehr auf dem Endgerät installiert werden, sondern läuft vollständig in einem Browser, wie beispielsweise Google Chrome, Mozilla Firefox, Microsoft Edge oder mobilen Browsern. Dadurch brauchen die Anwendungsprogramme nur einmal entwickelt werden und sind völlig plattformunabhängig. Die Anwendungsprogramme können sowohl auf Desktop-Systemen wie beispielsweise Personal Computern, als auch auf mobilen Geräten wie Tablets und Smartphones ausgeführt werden.

Zur Konfiguration des Sensors wird durch das Anwendungsprogramm im Sensor beziehungsweise in einer Steuer- und Auswerteeinheit des Sensors üblicherweise ein Konfigurationsmodus aktiviert, in welchem beispielsweise eine Parametrierung oder Diagnose des Sensors erfolgen kann. Die Leistungsfähigkeit des Sensors im Konfigurationsmodus ist dabei im Vergleich zu einem regulären Produktivmodus des Sensors häufig limitiert. Beispielsweise kann die Rechenleistung der Steuer- und Auswerteeinheit des Sensors verringert sein oder es können Auswertefunktionen deaktiviert sein, so dass Prozessdaten, die der Sensor im Produktivmodus liefert, nicht verfügbar sind. Nach erfolgter Parametrierung beziehungsweise Diagnose des Sensors erfolgt eine Deaktivierung des Konfigurationsmodus durch die Anwendungssoftware und der Sensor wird wieder im Produktivmodus betrieben. In der Regel muss der Konfigurationsmodus manuell aktiviert oder deaktiviert werden, so dass ein erhöhtes Risiko besteht, dass zum Ende der Parametrierung keine Deaktivierung des leistungshindernden Konfigurationsmodus erfolgt, insbesondere dann, wenn der Konfigurationsmodus nicht geplant abgeschlossen werden kann, beispielsweise bei einem Absturz der Anwendungssoftware oder einem Ausfall des Endgeräts. Die Folge ist, dass der Sensor im Konfigurationsmodus verbleibt und mit verminderter Leistungsfähigkeit betrieben wird.

Es ist daher Aufgabe der Erfindung, einen konfigurierbaren Sensor beziehungsweise ein Verfahren zum Konfigurieren eines Sensors zu verbessern.

Diese Aufgabe wird gelöst durch einen konfigurierbaren Sensor nach Anspruch 1, ein System zum Konfigurieren eines Sensors nach Anspruch 5, sowie durch ein Verfahren zum Konfigurieren eines Sensors nach Anspruch 11.

Ein erfindungsgemäßer Sensor weist eine Steuer- und Auswerteeinheit auf, die einen oder mehrere digitale Rechenbausteine aufweisen kann, beispielsweise einen digitalen Signalprozessor, einen Mikrocontroller, eine anwendungsspezifische integrierte Logik (ASIC), ein feldprogrammierbares Gate Array (FPGA), eine komplex programmierbare Logik (CPLD) oder eine Programmierbare Array Logik (PAL). Die Steuer- und Auswerteeinheit kann Teil des Sensors oder zumindest teilweise extern vorgesehen sein.

Der Sensor weist weiterhin einen Speicher auf, in dem wenigstens ein Parametersatz des Sensors speicherbar ist. Der Parametersatz kann beispielsweise Betriebsparameter umfassen, die von der Art des jeweiligen Sensors abhängen. Der Speicher kann bevorzugt Teil der Steuer- und Auswerteeinheit sein. Speicher und Steuer- und Auswerteinheit bilden dann ein gemeinsames elektronisches Bauteil.

In der Steuer- und Auswerteeinheit ist ein Konfigurationsmodus des Sensors durch ein auf einem mit dem Sensor verbundenen Endgerät vorgesehenen Anwendungsprogramm aktivierbar. Wie oben beschrieben, kann im Konfigurationsmodus eine Parametrierung oder Diagnose des Sensors erfolgen.

Erfindungsgemäß ist die Steuer- und Auswerteeinheit dazu eingerichtet, ein vom Anwendungsprogramm wiederholt ausgesendetes Aktivitätssignal zu empfangen. Das Aktivitätssignal wird auch als "Heartbeat" bezeichnet. Durch das Aktivitätssignal erhält die Steuer- und Auswerteeinheit die Information, dass das Anwendungsprogramm aktiv ist, also insbesondere nicht geplant oder ungeplant beendet wurde (beispielsweise durch einen Programmabsturz oder einen Ausfall des Endgeräts). Die Steuer- und Auswerteeinheit ist dazu eingerichtet den Konfigurationsmodus des Sensors zu deaktivieren sowie den Sensor in einen Produktivmodus zu versetzen, wenn das Aktivitätssignal nicht innerhalb eines vorgegebenen Zeitabstands empfangen wird. Der vorgegebene Zeitabstand kann beispielsweise ein sogenannter Timeoutwert sein, mit dem das Anwendungsprogramm definiert, wann es sich spätestens wieder bei der Steuer- und Auswerteeinheit beziehungsweise dem Sensor meldet. Dadurch wird gewährleistet, dass der Sensor bei Ausbleiben des Aktivitätssignals selbstständig und zuverlässig zurück in den Produktivmodus versetzt wird und nicht im gegebenenfalls leistungsbeschränkten Konfigurationsmodus verbleibt.

Im Speicher des Sensors kann bevorzugt eine Information über den vorgegebenen Zeitabstand hinterlegt werden. Damit kann die Steuer- und Auswerteeinheit auf verschiedene Anwendungsprogramme angepasst werden, sofern diese Aktivitätssignale in unterschiedlichen Zeiträumen beziehungsweise Perioden, aussenden.

Bevorzugt kann die Steuer- und Auswerteeinheit dazu eingerichtet sein, die Information über den vorgegebenen Zeitabstand vom Anwendungsprogramm selbst zu empfangen und diese im Speicher zu speichern. Dadurch ist eine noch höhere Flexibilität des Sensors gegeben, da die Information über den vorgegebenen Zeitabstand direkt vom verwendeten Anwendungsprogramm bezogen werden kann und eine separate nutzerseitige Einstellung nicht nötig ist.

Die Steuer- und Auswerteeinheit kann dazu eingerichtet sein, den Sensor nach der Deaktivierung des Konfigurationsmodus mit einem werksseitig gespeicherten Standardparametersatz zurück in den Produktivmodus zu versetzen. Alternativ kann die Steuer- und Auswerteeinheit dazu eingerichtet sein vor Aktivierung des Konfigurationsmodus einen ersten Parametersatz des Sensors im Speicher zu speichern und nach der Deaktivierung des Konfigurationsmodus den Sensor mit dem ersten Parametersatz zurück in den Produktivmodus zu versetzen. Dies hat den Vorteil, dass der Sensor auch bei einer unvollständigen Konfiguration mit einem definierten Parametersatz zurück in den Produktivmodus wechseln kann.

Der Sensor kann als optoelektronischer Sensor (beispielsweise Laserscanner oder Kamera) zur Beobachtung beziehungsweise Erfassung von Werkstücken, Gegenständen oder Personen in industriellen Prozessen, beispielsweise bei der Herstellung, Verarbeitung und/oder Sortierung, ausgebildet sein.

Der Sensor kann auch als Feldgerät der Prozessautomatisierung, also beispielsweise als Analysator, Transmitter, insbesondere O2-Transmitter, oder als Feldgerät zur Rauchgasuntersuchung, beispielsweise als Partikelmessgerät oder Spektrometer ausgebildet sein.

Der Sensor kann insbesondere als Codeleser ausgebildet sein. Codeleser sind von Supermarktkassen, zur automatischen Paketidentifikation, Sortierung von Postsendungen, von der Gepäckabfertigung in Flughäfen und aus anderen Logistikanwendungen bekannt. Weitverbreitet sind Codescanner, bei denen ein Lesestrahl mittels eines Drehspiegels oder eines Polygonspiegelrads quer über den Code geführt wird. Mit der Weiterentwicklung der digitalen Kameratechnologie werden zunehmend auch kamerabasierte Codeleser eingesetzt. Statt Codebereiche abzuscannen, nimmt ein kamerabasierter Codeleser mit Hilfe eines Bildsensors Bilder der Objekte mit den darauf befindlichen Codes auf, und eine Bildauswertungssoftware extrahiert aus diesen Bildern die Codeinformation.

Ein erfindungsgemäßes System zum Konfigurieren eines Sensors umfasst einen wie oben beschriebenen Sensor mit einer Steuer- und Auswerteeinheit, sowie ein mit dem Sensor verbundenes Endgerät.

Das Endgerät kann beispielsweise ein PC, ein Tablet-PC, ein Laptop, ein Notebook, ein Netbook, ein Mobiltelefon, eine Eingabe/Ausgabeeinheit einer Maschine oder ein Smartphone sein. Dadurch kann der Sensor durch die genannten verschiedenen Endgeräte parametriert oder diagnostiziert werden. Dadurch kann der Sensor mit dem Endgerät parametriert oder diagnostiziert werden, welches gerade zur Verfügung steht. Beispielsweise kann ein Smartphone benutzt werden, da ein Smartphone handlich ist und meistens ohnehin bei einem Anwender vorhanden ist. Dadurch ist für den Anwender eine flexible Parametrierung und/oder Diagnose des Sensors möglich.

Auf dem Endgerät ist ein Anwendungsprogramm vorgesehen, wobei das Anwendungsprogramm dazu ausgebildet ist den Konfigurationsmodus des Sensors zu aktivieren und wiederholt ein Aktivitätssignal an die Steuer- und Auswerteeinheit des Sensors zu senden.

Das Anwendungsprogramm kann bevorzugt als Web-Anwendungsprogramm ausgebildet sein und auf einem auf dem Endgerät installierten Browser, wie beispielsweise Google Chrome, Mozilla Firefox, Microsoft Edge oder mobilen Browsern laufen. Dadurch brauchen die Anwendungsprogramme nur einmal entwickelt werden und sind völlig plattformunabhängig.

Das Anwendungsprogramm kann bevorzugt dazu ausgebildet sein, das Aktivitätssignal periodisch auszusenden. Die Periode, beziehungsweise der Zeitabstand, in dem das Aktivitätssignal ausgesendet wird, kann dann als Information über den vorgegebenen Zeitabstand, in dem die Steuer- und Auswerteeinheit das jeweils nächste Aktivitätssignal erwartet, im Speicher des Sensors gespeichert werden.

Das Anwendungsprogramm kann bevorzugt dazu ausgebildet sein eine Information über den vorgegebenen Zeitabstand an die Steuer- und Auswerteeinheit zu senden. In der Steuer- und Auswerteeinheit muss dann a-priori kein vorgegebener Zeitabstand hinterlegt werden und der vorgegebene Zeitabstand kann abhängig vom verwendeten Anwendungsprogramm eingestellt werden.

Bevorzugt kann das Aktivitätssignal die Information über den vorgegebenen Zeitabstand umfassen. Damit kann die Steuer- und Auswerteeinheit beim Empfang des Aktivitätssignals eine aktualisierte Information über den vorgegebenen Zeitabstand erhalten.

Der vorgegebene Zeitabstand kann vorzugsweise von einem Zustand des Anwendungsprogramms oder des Endgeräts abhängig sein. Beispielsweise kann der vorgegebene Zeitabstand kürzer sein, wenn sich das Anwendungsprogramm in einem aktiven Zustand befindet und länger sein, wenn sich das Anwendungsprogramm in einem Ruhezustand befindet. Beispielsweise kann ein Anwendungsprogramm in einem aktiven Zustand wiederholt Aktivitätssignale in einem ersten Zeitabstand senden und in einem Ruhezustand wiederholt Aktivitätssignale in einem zweiten Zeitabstand senden, wobei der erste Zeitabstand kürzer als der zweite Zeitabstand ist.

Insbesondere bei browserbasierten Anwendungsprogrammen können Zeitabstände beziehungsweise Intervalle, in denen Aktivitätssignale ausgesendet werden können, vom Browser limitiert werden, falls ein aktives Anwendungsprogramm in den Hintergrund gerät. Dies ist beispielsweise der Fall, wenn das Anwendungsprogramm in einem nicht aktiven Tab im Browser geöffnet ist oder der Browser nicht das aktive Fenster ist. In diesem Fall sendet das Anwendungsprogramm Aktivitätssignale erst nach einem längeren Zeitabstand als im aktiven Zustand.

Besonders bevorzugt kann das Anwendungsprogramm bei einer Zustandsänderung einen aktualisierten vorgegebenen Zeitabstand an die Steuer- und Auswerteeinheit senden, insbesondere, bevor das Anwendungsprogramm im Hintergrund beziehungsweise in einem nicht aktiven Tab des Browsers ausgeführt wird. Damit wird ermöglicht, im Fall eines aktiven Anwendungsprogramms ein eng getaktetes Aktivitätssignal zu senden und sehr zeitnah in den Produktivmodus zurückzukehren, sobald das Aktivierungssignal ausfällt, jedoch ebenfalls sicher ein Aktivitätssignal mit großem Zeitintervall zu senden, wenn das Anwendungsprogramm im Hintergrund, beispielsweise in einem nicht aktiven Tab des Browsers ausgeführt wird. Somit ist in jedem Szenario sichergestellt, dass zu einem optimalen Zeitpunkt automatisch in den Produktivmodus zurückgekehrt werden kann.

Die Verbindung von Sensor und Endgerät kann kabelgebunden ausgeführt sein, beispielsweise durch eine Ethernet-Verbindung oder ein Bussystem. Alternativ kann zwischen Sensor und Endgerät eine drahtlose Verbindung, beispielsweise eine Funkverbindung, beispielsweise eine Bluetooth- oder Wireless LAN (WLAN)-Verbindung vorgesehen sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein System mit einem erfindungsgemäßen Sensor und einem Endgerät;
- Figur 2: ein beispielhaftes Ablaufdiagramm 34 eines erfindungsgemäßen Verfahrens zur Konfiguration eines Sensors;
- Figur 3: ein beispielhaftes Sequenzdiagramm des erfindungsgemäßen Verfahrens zur Konfiguration eines Sensors;
- Figur 4: ein weiters beispielhaftes Sequenzdiagramm des erfindungsgemäßen Verfahrens zur Konfiguration eines Sensors.

In den nachfolgenden Figuren sind identische Teile mit identischen Bezugszeichen versehen.

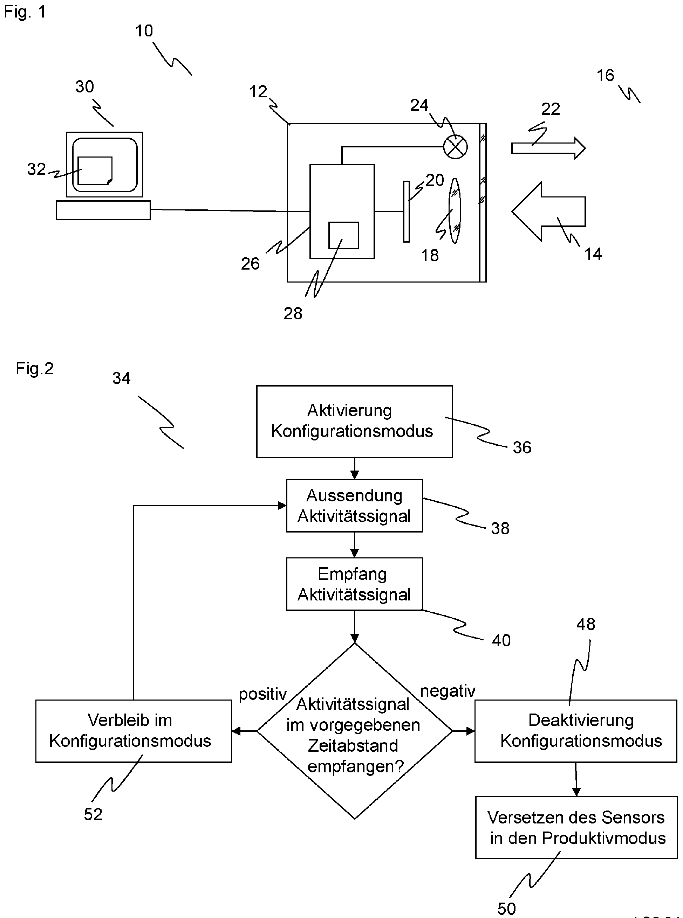

Figur 1 zeigt ein System 10 mit einem erfindungsgemäßen Sensor, hier beispielhaft dargestellt als optoelektronischer Sensor 12 mit einer Steuer- und Auswerteeinheit 26. Empfangslicht 14 aus einem Erfassungsbereich 16 trifft auf eine Empfangsoptik 18, die das Empfangslicht 14 auf einen Bildsensor 20 führt. Die optischen Elemente der Empfangsoptik 18 sind vorzugsweise als Objektiv aus mehreren Linsen und anderen optischen Elementen wie Blenden, Prismen und dergleichen ausgestaltet, hier aber vereinfachend nur durch eine Linse repräsentiert. Um den Erfassungsbereich 16 während einer Aufnahme des Sensors 12 mit Sendelicht 22 auszuleuchten, umfasst der Sensor 12 eine optionale Beleuchtungseinheit 24, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 24 wie deren Farbe, Intensität und Richtung anzupassen. Die Beleuchtungseinheit 24 kann abweichend von der Darstellung extern sein.

Eine Steuer- und Auswertungseinheit 26 ist mit dem Bildsensor 20 und der Beleuchtungseinheit 24 verbunden und für die Steuerungs-, Auswertungs- und sonstigen Koordinierungsaufgaben in dem Sensor 12 zuständig. Sie umfasst einen oder mehrere Verarbeitungsbausteine, wie ein FPGA und/oder einen Mikroprozessor, und wertet die Bilddaten des Bildsensors 18 aus.

Im Sensor 12 ist ein Speicher 28 vorgesehen, der hier beispielhaft als Teil der Steuer- und Auswerteeinheit 26 ausgeführt ist. Im Speicher 28 ist wenigstens ein Parametersatz des Sensors 12 speicherbar. Der Parametersatz kann beispielsweise Betriebsparameter des Bildsensors 20 und der Beleuchtungseinheit 24 umfassen.

Der Sensor 12 ist mit einem Endgerät 30 verbunden, hier schematisch als PC dargestellt. Das Endgerät 30 kann beispielsweise auch ein Tablet-PC, ein Laptop, ein Notebook, ein Netbook, ein Mobiltelefon, eine Eingabe/Ausgabeeinheit einer Maschine oder ein Smartphone sein. Auf dem Endgerät 30 ist ein Anwendungsprogramm 32 zur Parametrierung und/oder Diagnose des Sensors vorgesehen. Die Verbindung zwischen Endgerät 30 und Sensor 12 kann kabelgebunden oder drahtlos ausgeführt sein.

Das Anwendungsprogramm 32 ist dazu eingerichtet, einen Konfigurationsmodus des Sensors 12 zu aktivieren. Im Konfigurationsmodus kann der Sensor beispielsweise durch das Anwendungsprogramm 32 parametriert werden.

Die Steuer- und Auswertungseinheit 26 ist dazu eingerichtet, ein vom Anwendungsprogramm 32 des Endgeräts 30 an die Steuer- und Auswerteeinheit 26 wiederholt ausgesendetes Aktivitätssignal des Anwendungsprogramms 32 zu empfangen und den Konfigurationsmodus zu deaktivieren sowie den Sensor 12 in einen Produktivmodus zu versetzen, wenn das Aktivitätssignal nicht innerhalb eines vorgegebenen Zeitabstands empfangen wird.

Figur 2 zeigt ein beispielhaftes Ablaufdiagramm 34 eines erfindungsgemäßen Verfahrens zur Konfiguration des Sensors 12 aus Figur 1 mit dem mit dem Sensor 12 verbundenen Endgerät 30.

In einem ersten Schritt erfolgt eine Aktivierung 36 eines Konfigurationsmodus des Sensors 12 in der Steuer- und Auswerteeinheit 26 des Sensors 12 durch ein auf dem Endgerät 30 vorgesehenes Anwendungsprogramm 32.

Im weiteren Verlauf erfolgt ein wiederholtes Aussenden 38 eines Aktivitätssignals des Anwendungsprogramms 32 an die Steuer- und Auswerteeinheit 26 durch das Anwendungsprogramm 32 und ein Empfangen 40 des Aktivitätssignals 64 durch die Steuer- und Auswerteeinheit 26.

Wird das Aktivitätssignal 64 von der Steuer- und Auswerteeinheit 26 nicht innerhalb eines vorgegebenen Zeitabstands empfangen, erfolgt eine Deaktivierung 48 des Konfigurationsmodus des Sensors 12 und ein Zurücksetzen 50 des Sensors 12 in einen Produktivmodus durch die Steuer- und Auswerteeinheit 26. Wird das Aktivitätssignal 64 von der Steuer- und Auswerteeinheit 26 innerhalb des vorgegebenen Zeitabstands empfangen, verbleibt 52 der Sensor 12 im Konfigurationsmodus.

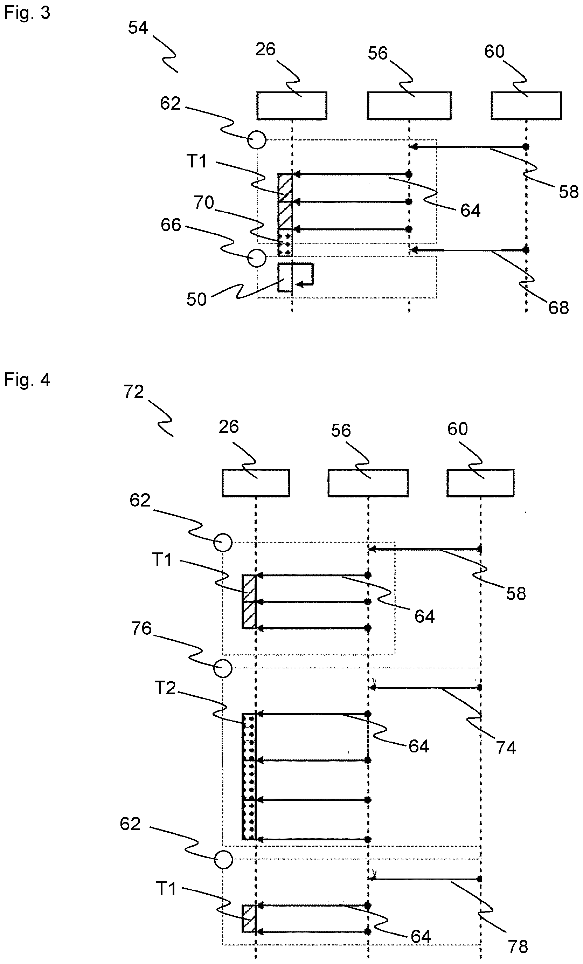

Figur 3 zeigt ein beispielhaftes Sequenzdiagramm 54 eines erfindungsgemäßen Verfahrens zur Konfiguration eines Sensors 12 mit einem browserbasierten Anwendungsprogramm 56. Nach dem Start 58 des Anwendungsprogramms 56 durch einen Browser 60 auf dem Endgerät 30 sendet das Anwendungsprogramm 56 in einem aktiven Zustand 62 mit einem ersten, vorzugsweise gleichbleibenden Zeitabstand T1 (beispielswiese 60 Sekunden) wiederholt ein Aktivitätssignal 64 an die Steuer- und Auswerteeinheit 26 des Sensors 12. Wechselt das Anwendungsprogramm 56 in einen inaktiven Zustand 66, beispielsweise durch Stoppen 68 des Anwendungsprogramms durch den Browser, erfolgt ein Ausbleiben 70 des Aktivitätssignals 64. Sobald die Steuer- und Auswerteeinheit 26 kein Aktivitätssignal 64 innerhalb des ersten Zeitabstands T1 empfängt, deaktiviert sie den Konfigurationsmodus und es erfolgt ein Zurücksetzen 50 des Sensors 12 in den Produktivmodus.

Figur 4 zeigt ein weiteres beispielhaftes Sequenzdiagramm 72 eines erfindungsgemäßen Verfahrens zur Konfiguration eines Sensors 12 mit einem browserbasierten Anwendungsprogramm 56. Nach dem Start 58 des Anwendungsprogramms 56 durch den Browser 60 auf dem Endgerät 30 sendet das Anwendungsprogramm 56 zunächst in einem aktiven Zustand 62 wiederholt ein Aktivitätssignal 64 mit einem ersten, vorzugsweise gleichbleibenden Zeitabstand T1 (beispielsweise 60 Sekunden) an die Steuer- und Auswerteeinheit 26 des Sensors 12. Bei einer Zustandsänderung 74 des Anwendungsprogramms 56 in einen Hintergrundzustand 76, beispielsweise wenn das Anwendungsprogramm 56 in einem nicht aktiven Tab des Browsers 60 geöffnet ist oder der Browser 60 nicht in einem aktiven Fenster auf dem Endgerät 30 ausgeführt wird, sendet das Anwendungsprogramm 56 das Aktivitätssignal 64 mit einem zweiten, vorzugsweise gleichbleibenden Zeitabstand T2 (beispielswiese 300 Sekunden), der länger ist als der erste Zeitabstand T1 im aktiven Zustand 62 des Anwendungsprogramms 56. Daher sendet das Anwendungsprogramm 56 beim Zustandswechsel eine Information über den aktualisierten vorgegebenen Zeitabstand T2 an die Steuer- und Auswerteeinheit 56. Damit wird ein Zurücksetzen des Sensors 12 in den Produktivmodus verhindert, wenn das Anwendungsprogramm 56 im Hintergrundzustand 76 ausgeführt und Aktivitätssignale 62 in längeren Zeitabständen gesendet werden.

Nach einer weiteren Zustandsänderung 78 des Anwendungsprogramms 56 zurück in den aktiven Zustand 62 sendet das Anwendungsprogramm 56 das Aktivitätssignal 64 wieder im ersten Zeitabstand T1 (beispielsweise 60 Sekunden) an die Steuer- und Auswerteeinheit 56 und sendet die Information über den aktualisierten vorgegebenen ersten Zeitabstand T1 bei der Zustandsänderung 78 an die Steuer- und Auswerteeinheit 26. Damit wird ermöglicht, im Fall eines aktiven Anwendungsprogramms 56 ein eng getaktetes Aktivierungssignal 64 zu senden zeitnah in den Produktivmodus zurückzukehren, sobald das Aktivierungssignal 64 ausfällt, jedoch ebenfalls sicher ein Aktivierungssignal 64 mit großem Zeitintervall zu senden, wenn das Anwendungsprogramm 56 im Hintergrund, beispielsweise in einem nicht aktiven Tab des Browsers ausgeführt wird.

### Bezugszeichen:

| | | | |
|---|---|---|---|
| 10 | System | 50 | Zurücksetzen in den Produktivmodus |
| 12 | Sensor | 52 | Verbleiben im Konfigurationszustand |
| 14 | Empfangslicht | 54, 72 | Sequenzdiagramm |
| 16 | Erfassungsbereich | 58 | Start des Anwendungsprogramms |
| 18 | Empfangsoptik | 60 | Browser |
| 20 | Bildsensor | 62 | aktiver Zustand |
| 22 | Sendelicht | 64 | Aktivitätssignal |
| 24 | Beleuchtungseinheit | 66 | inaktiver Zustand |
| 26 | Steuer- und Auswertungseinheit | 68 | Stoppen des Anwendungsprogramms |
| 28 | Speicher | 70 | Ausbleiben des Aktivitätssignals |
| 30 | Endgerät | 74, 78 | Zustandsänderung |
| 32, 56 | Anwendungsprogramm | 76 | Hintergrundzustand |
| 34 | Ablaufdiagramm | T1 | erster Zeitabstand |
| 36 | Aktivierung des Konfigurationszustands | T2 | zweiter Zeitabstand |
| 38 | Aussenden des Aktivitätssignals | | |
| 40 | Empfangen des Aktivitätssignals | | |

## Patentansprüche

1. Konfigurierbarer Sensor (12) mit einer Steuer- und Auswerteeinheit (26) und einem Speicher (28), wobei in der Steuer- und Auswerteeinheit (26) ein Konfigurationsmodus des Sensors (12) durch ein auf einem mit dem Sensor (12) verbundenen Endgerät (30) vorgesehenen Anwendungsprogramm (32, 56) aktivierbar ist und in dem Speicher (28) wenigstens ein Parametersatz des Sensors (12) speicherbar ist,
**dadurch gekennzeichnet, dass**
die Steuer- und Auswerteeinheit (26) dazu eingerichtet ist, ein vom Anwendungsprogramm (32, 56) an die Steuer- und Auswerteeinheit (26) ausgesendetes Aktivitätssignal (64) des Anwendungsprogramms (32, 56) zu empfangen und den Konfigurationsmodus des Sensors (12) zu deaktivieren und den Sensor (12) in einen Produktivmodus zu versetzen, wenn das Aktivitätssignal (64) nicht innerhalb eines vorgegebenen Zeitabstands (T1, T2) empfangen wird.

2. Sensor (12) nach Anspruch 1, wobei eine Information über den vorgegebenen Zeitabstand (T1, T2) in dem Speicher (28) speicherbar ist.

3. Sensor (12) nach Anspruch 2, wobei die Steuer- und Auswerteeinheit (26) dazu eingerichtet ist, die Information über den vorgegebenen Zeitabstand (T1, T2) vom Anwendungsprogramm (32,56) zu empfangen und in dem Speicher (28) zu speichern.

4. Sensor (12) nach einem der vorhergehenden Ansprüche, wobei die Steuer- und Auswerteeinheit (26) dazu eingerichtet ist, den Sensor (12) nach der Deaktivierung des Konfigurationsmodus mit werksseitig gespeichertem Standardparametersatz in den Produktivmodus zu versetzen oder vor Aktivierung des Konfigurationsmodus einen ersten Parametersatz des Sensors (12) in dem Speicher (28) zu speichern und den Sensor (12) nach der Deaktivierung des Konfigurationsmodus mit dem ersten Parametersatz in den Produktivmodus zu versetzen.

5. System (10) zum Konfigurieren eines Sensors (12), umfassend
- einen Sensor (12) nach einem der vorhergehenden Ansprüche
- ein mit dem Sensor (12) verbundenes Endgerät (30) mit einem auf dem Endgerät (30) vorgesehenen Anwendungsprogramm (32, 56), wobei das Anwendungsprogramm (32, 56) dazu ausgebildet, ist den Konfigurationsmodus des Sensors (12) zu aktivieren und wiederholt ein Aktivitätssignal (64) an die Steuer- und Auswerteeinheit (26) zu senden.

6. System (10) nach Anspruch 5, wobei das Anwendungsprogramm (32, 56) das Aktivitätssignal (64) periodisch aussendet.

7. System (10) nach Anspruch 5 oder 6, wobei das Anwendungsprogramm (32, 56) eine Information über den vorgegebenen Zeitabstand (T1, T2) an die Steuer- und Auswerteeinheit (26) sendet.

8. System (10) nach Anspruch 7, wobei das Aktivitätssignal (26) die Information über den vorgegebenen Zeitabstand (T1, T2) umfasst.

9. System (10) nach einem der Ansprüche 5 bis 8, wobei der vorgegebene Zeitabstand (32, 56) von einem Zustand des Anwendungsprogramms (26) oder des Endgeräts (30) abhängig ist.

10. System (10) nach einem der Ansprüche 5 bis 9, wobei das Endgerät (30) ein PC, ein Tablet-PC, ein Laptop, ein Notebook, ein Netbook, ein Mobiltelefon, eine Eingabe/Ausgabeeinheit einer Maschine oder ein Smartphone ist.

11. Verfahren (34, 54, 72) zum Konfigurieren eines Sensors (12) mit einem mit dem Sensor (12) verbundenen Endgerät (30), wobei auf dem Endgerät (30) ein Anwendungsprogramm (32, 56) zur Konfiguration des Sensors (12) vorgesehen ist und ein Konfigurationsmodus des Sensors (12) in einer Steuer- und Auswerteeinheit (26) des Sensors (12) durch das Anwendungsprogramm (32, 56) aktiviert wird, **gekennzeichnet durch** die Schritte
- Aussenden (38) eines Aktivitätssignals (64) des Anwendungsprogramms (32, 56) an die Steuer- und Auswerteeinheit (26) durch das Anwendungsprogramm (32, 56),
- Empfangen (40) des Aktivitätssignals (64) durch die Steuer- und Auswerteeinheit (26), und
- Deaktivieren (50) des Konfigurationsmodus des Sensors (12) und Versetzen (52) des Sensors (12) in einen Produktivmodus, durch die Steuer- und Auswerteeinheit (26), wenn das Aktivitätssignal (64) von der Steuer- und Auswerteeinheit (26) nicht innerhalb eines vorgegebenen Zeitabstands (T1, T2) empfangen wird.

12. Verfahren (34, 54, 72) nach Anspruch 11, wobei das das Aktivitätssignal (64) periodisch ausgesendet wird.

13. Verfahren (34, 54, 72) nach Anspruch 11 oder 12, wobei eine Information über den vorgegebenen Zeitabstand (T1, T2) an die Steuer- und Auswerteeinheit (26) gesendet wird.

14. Verfahren (34, 54, 72) nach Anspruch 13, wobei das Aktivitätssignal (64) die Information über den vorgegebenen Zeitabstand (T1, T2) umfasst.

15. Verfahren (34, 54, 72) nach Anspruch 11, wobei der vorgegebene Zeitabstand (T1, T2) von einem Zustand des Anwendungsprogramms (32, 56) oder des Endgeräts (30) abhängig ist.
